# EUROPEAN PATENT APPLICATION

(11) **EP 0 659 332 A1**
(43) Date of publication of application: **28.06.1995**
(21) Application number: 94119987.9
(22) Date of filing: 16.12.1994
(51) Int. Cl.: A01D 90/04

(54) **Device for gathering and cutting forage and straw**

(30) Priority: 20.12.1993 IT MN930031
(71) Applicant: D.B.D. S.p.A., I-46020 Motteggiana (Prov. of Mantova) (IT)
(72) Inventor: Delcomune, Walter, I-46029 Suzzana (Mantova) (IT)
(74) Representative: Modiano, Guido, Dr.-Ing.

(57) **Abstract**

Device for gathering and cutting forage and straw including a gathering unit that is adapted to lift the product from the field to make it available to a rotary feeder (8) provided with teeth (9,10) that are distributed in pairs and drag the product, which rests on a base surface (4); the device is characterized by a blade (21) which has a cutting motion, acts in the interspace between the two teeth (9,10) of each pair, and protrudes, at least in the active position, from a groove provided in the base surface (4).

## Description

The present invention relates to a device for gathering and cutting forage and straw.

It is known that currently there is a trend toward cutting the stalks of forage or straw, so as to reduce them to pieces measuring a few centimeters in length, when they are gathered from the field before introducing the product in the chamber of a press for forming bales or onto the loading platform of a self-loading trailer.

The aim achieved with this cutting, if the product is reduced to cylindrical or prism-shaped bales, is a high compaction that helps to save storage space and provides optimum preservation conditions; said bales are furthermore constituted by a product that is already ready to be poured into mangers or fodder preparation mixers without having to undergo further treatments.

This second advantage also applies to the product to be introduced in a self-loading trailer, for which it should also be noted that cutting facilitates optimum loading.

The main systems currently used to cut forage constituted by grass, hay, or straw cause the product, pushed by appropriate conveyor elements, to pass in contact with fixed blades, but this produces a disadvantageous situation both because the cutting device absorbs a considerable amount of power, which is required to overcome the resistance that the fixed blades offer to the passage of the mass of product in a condition that is often on the brink of jamming, and because the cutting is actually produced by tearing the fibers, thus damaging the integrity of the product.

The aim of the present invention is therefore to provide a device for gathering and cutting forage and straw that requires low installed power levels for its operation and furthermore cuts the product in optimum conditions, so as to provide maximum protection of the characteristics of said product.

The proposed aim is achieved by a device for gathering and cutting forage and straw, according to the invention, comprising a gathering unit that is adapted to lift the product from the field to make it available to a rotary feeder provided with teeth that are distributed in pairs and entrain the product, which rests on a base surface, characterized in that there is a blade which is provided with a cutting motion, acts in the interspace between the two teeth of each pair, and protrudes, at least in the active position, from a groove provided in the base surface.

Further characteristics and advantages will become apparent from the description of some preferred but not exclusive embodiments of the invention, illustrated only by way of non-limitative example in the accompanying drawings, wherein:
figure 1 is a perspective view of the device according to the present invention;
figure 2 is a sectional view, taken along the plane II-II of figure 1;
figure 3 is a view of the operating concept of the blades included in the invention according to the above figures;
figure 4 is a view of a rotary blade according to another embodiment;
figure 5 is a view of a further embodiment of the invention.

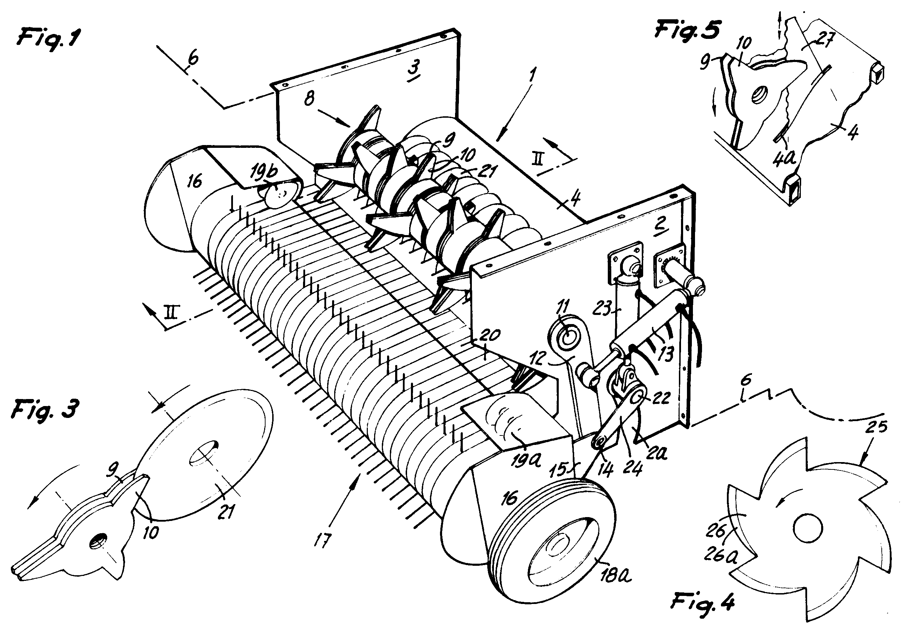

With reference to figures 1, 2, and 3, the reference numeral 1 generally designates the device according to the invention, which comprises the two side walls 2 and 3 for supporting the base surface 4; said side walls are connected by the cross-members 5a and 5b and are adapted to be assembled on the body of a rotary press, of which part of the external profile 6 and one of the rollers 7 provided in the round bale forming chamber are illustrated as reference.

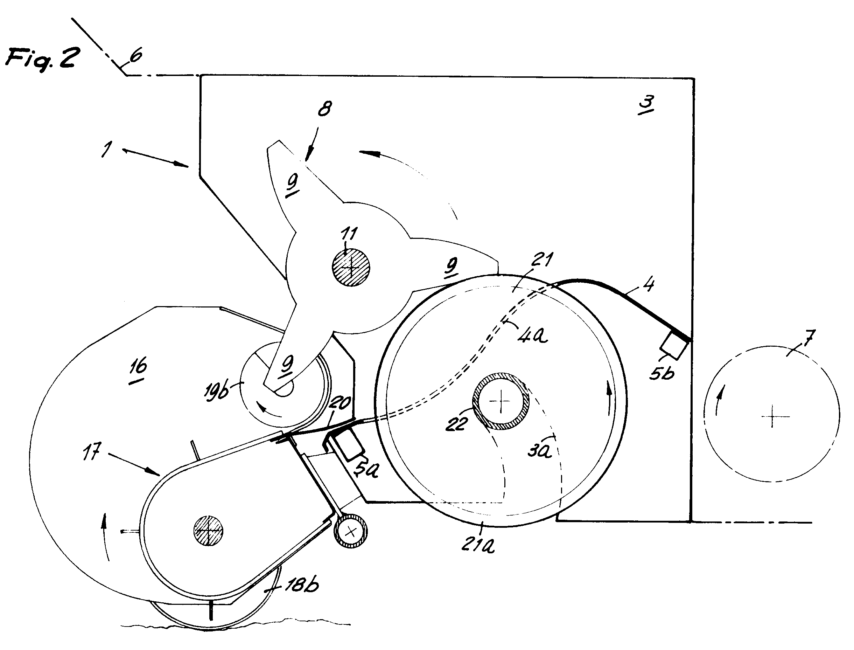

The side walls 2 and 3 also support the rotary feeder 8, provided with teeth distributed in pairs such as 9 and 10, and the shaft 11 of said feeder supports a lever such as 12 for each side wall; said feeder is motorized so that it rotates in the direction indicated by the arrow shown in figure 2 by virtue of means which are not shown in the figures and draw their motion from the towing tractor of the rotary press; said lever 12 is connected, by means of a hinge, to an actuation cylinder 13, and a gusset plate such as 15 is pivoted to said lever at its lower end at 14; said gusset plate 15 is rigidly coupled to the frame 16 of the known gathering unit, designated by the reference numeral 17, which is provided with the wheels 18a, 18b for resting on the ground; in this way said gathering unit is free to perform, during its work in the field, the oscillations that are required to follow the contour of the ground.

Said gathering unit, also by virtue of the action of the screw feeders 19a and 19b, moves the product lifted from the field so that it is available to the rotary feeder 8, making it pass over blades 20, made of elastic material, which connect the gathering unit 17 to the base surface 4; when the product makes contact with said base, it is pushed by the action of said rotary feeder.

A blade 21 acts in the interspace of each pair of teeth of the rotary feeder 8; said blade rotates and accordingly has a cutting motion, and is constituted by a disk with a sharp edge 21a that protrudes in the active position, shown in figure 4, from a groove 4a formed in the base surface 4.

The operating concept of the rotating blades 21 is shown in figure 3 and shows high effectiveness in operation, as the product is entrained very easily by the pairs of teeth 9 and 10 between which said blades act, without the risk of jams to be removed with high installed power levels, and also because the blades act on the product so as to produce a clean cut without fiber tearing, which would damage the quality of the product.

All the blades 21 are keyed on the shaft 22, which is rotated in the direction indicated by the arrow shown in figures 2 and 3 by means which are not shown and is inserted, at its ends, in the grooves 2a and 3a formed in the side walls 2 and 3 respectively and is supported by actuation cylinders 23; levers 24, pivoted at 14, connect the ends of said shaft to the levers 12.

The actuation cylinders 23 provide the shaft 22 with flexible support so that it can descend, and subsequently return into position, when foreign matter ends in front of the rotating blades; said cylinders can furthermore act on the shaft 22 so as to rotate it about the pivots such as 14, with a lowering motion within the grooves 2a and 3a, to leave the active position shown in the figure and move the blades below the base surface 4.

During these steps, the levers 12 remain motionless in the position shown in the figure; said levers are actuated by the cylinders 13 when it is necessary to lift the gathering unit 17 from contact with the ground, resting it on lower stroke limits not shown in the figures, and the movements of the levers 12 are not hindered by the shaft 22, which is connected to them by the levers 14, by virtue of the particular shape of the grooves 2a and 3a.

Figure 4 illustrates a rotating blade, generally designated by the reference numeral 25, according to another embodiment; said blade comprises teeth 26 which are sharp at 26a and can extend monolithically from a central disk, as in the case shown in the figure, or can be detachably fixed on said disk.

Figure 5 is a view of a further embodiment of the invention, in which the blade that protrudes from the groove 4a of the base surface 4 to act in the interspace between the teeth 9 and 10 of the rotary feeder is provided so as to match the blade 27, which is actuated with a reciprocating cutting motion as shown by the arrow in the figure.

The device according to the invention is susceptible of numerous modifications and variations in addition to those described, and all are included within the scope of the inventive concept; thus, for example, the direction of the motion of the rotating blades may be reversed with respect to the one shown in the figures.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. Device for gathering and cutting forage and straw, comprising a gathering unit that is adapted to lift the product from the field to make it available to a rotary feeder (8) provided with a plurality of teeth (9,10) that are distributed in pairs and entrain the product, which rests on a base surface (4), characterized in that there is at least one blade (21) which is provided with a cutting motion, each one of said at least one blade acts in the interspace between the two teeth (9,10) of each pair, and protrudes, at least in the active position, from a groove (4a) provided in the base surface.

2. Device according to claim 1, characterized in that said at least one blade is supported by flexible means (23) to lower them from the active position so as to be able to recover said position, said means (23) being adapted to move said at least one blade (21) from the active position, in which they protrude from the base surface, to an inactive position, in which said at least one blade is located at a level that lies below said surface.

3. Device according to one or more of the preceding claims, characterized in that the blades (21) are shaped like rotating disks.

4. Device according to one or more of the preceding claims, characterized in that the blades (21) are shaped like rotating disks with a sharp edge.

5. Device according to one or more of the preceding claims, characterized in that the blades (25) are shaped like rotating disks with sharp teeth (26).

6. Device according to one or more of the preceding claims, comprising two side walls (3,4) for supporting the base (4) surface and the rotary feeder (8), characterized in that it comprises, for each side wall, a lever (12) which is connected to actuation means (13), is pivoted to said side at one end (11), and is adapted to support, so that they are pivoted at the other end, the frame (16) of the gathering unit (17) and a lever (24) for connection to a motorized shaft that supports the rotating blades (21), is inserted, at its ends, in grooves (2a,3a) formed in the two side walls (2,3), and is supported by actuation cylinders (23).

7. Device according to one or more of the preceding claims, characterized in that the blades are provided so as to form reciprocating cutting edges.
